# EUROPEAN PATENT APPLICATION

(11) **EP 4 675 729 A1**
(43) Date of publication of application: **07.01.2026**
(21) Application number: 24874908.7
(22) Date of filing: 26.09.2024
(51) Int. Cl.: H01M 10/04, H01M 10/058, H01M 10/48

(54) **DEGASSING APPARATUS AND DEGASSING METHOD**

(30) Priority: 04.10.2023 KR 20230131630
(71) Applicant: LG ENERGY SOLUTION, LTD., Seoul 07335 (KR)
(72) Inventor: AN, Yong Ju, Daejeon 34122 (KR); CHUNG, Joo Young, Daejeon 34122 (KR); KIM, Seok Jin, Daejeon 34122 (KR)
(74) Representative: Goddar, Heinz J.
(86) International application number: PCT/KR2024/014629
(87) International publication number: WO 2025/075350

(57) **Abstract**

A degassing device according to one example of the present invention is a device for degassing gases inside a battery cell after an activation process of the battery cell including an electrode assembly, which may comprise a degassing pretreatment part provided to irradiate the battery cell with a microwave, for vibrating and heating the gases in the battery cell, and a degassing part provided so that after the microwave irradiation, a gas pocket in the battery cell is pierced and the gases are vacuum-sucked through the pierced portion.

## Description

### Technical Field

The present invention relates to a degassing device and a degassing method, and more particularly, relates to a degassing device and a degassing method that perform, after degassing pretreatment for inducing molecular movement of gases in a battery cell, a degassing process of removing the gases in the battery cell.

This application claims the benefit of priority based on Korean Patent Application No. 10-2023-0131630 dated October 4, 2023, the disclosure of which is incorporated herein by reference in its entirety.

### Background Art

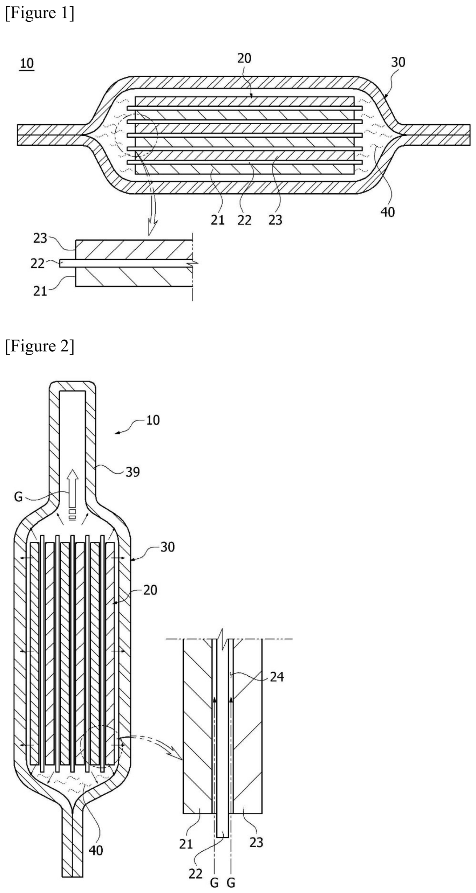

Figure 1 is a perspective diagram of a pouch-type battery cell (10).

The manufacturing steps of the pouch-type battery cell (10) may comprise an assembly step, an activation process, and a degassing step.

Referring to Figure 1, the battery cell (10) includes an electrode assembly (20), a pouch (30), and an electrolyte (40). The electrode assembly (20) is sequentially laminated with a negative electrode (21), a separator (22), a positive electrode (23), and a separator (22). The electrode assembly (20) is laminated so that the negative electrode (21) and the positive electrode (23) are separated by the separator (22) and are in contact with both sides of the separator (22).

In the assembly step of the battery cell (10), the electrode assembly (20) is accommodated in the pouch (30). Then, the electrolyte (40) is injected into a cup portion of the pouch (30). Next, the pouch (30) is sealed at edge portions of the pouch (30) so that the electrode assembly (20) and the electrolyte (40) are sealed in the cup portion.

Figure 2 is a diagram for explaining a flow of gas flowing in a loose space of an electrode assembly in an activation process.

In the activation process, the battery cell (10) is activated while repeating charging, aging, and discharging several times. The activation of the battery cell (10) is for stabilizing a battery structure and making it usable.

In the activation process, both sides of the electrode assembly (20) are pressurized, and charged and discharged in a state where the battery cell (10) is placed in an activation device (not shown) with a gas pocket (39) facing upward.

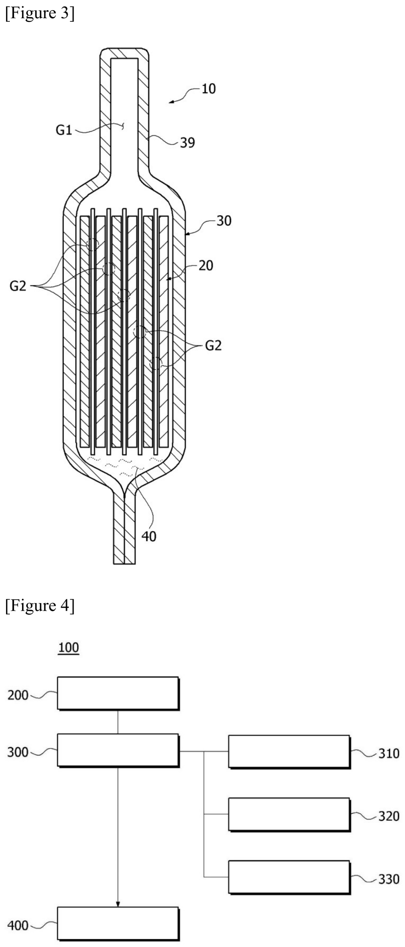

When the battery cell (10) is activated, a large amount of gas (G) is generated in the internal space of the battery cell (10). As shown in Figure 3, this gas (G) increases the pressure in the internal space of the battery cell (10) and expands the volume of the battery cell (10).

Referring to the enlarged view of Figure 2, when the battery cell (10) expands by the internal pressure due to the gas (G), the negative electrode (21) and the separator (22), or the separator (22) and the positive electrode (23), which have been in contact with each other, may be lifted. In the activation process, the gases (G) in the battery cell (10) may flow in the loose space (24) in the electrode assembly (20).

The battery cell (10) is aged after the activation process, where the gases (G) introduced into the electrode assembly (20) may be retarded in the loose space (24) while the molecular movement becomes dull.

Figure 3 is a diagram for explaining a distribution of gases (G) in a battery cell (10) after an activation process of the battery cell (10).

Referring to Figure 3, the gases (G) in the battery cell (10) may be divided into pocket gas (G1) captured in the gas pocket (39) and stagnant gas (G2) retarded in the electrode assembly (20).

The battery cell (10) is subjected to degassing after aging. The degassing step is for removing gases (G) in the battery cell (10).

In the degassing step, the pocket gas (G1) may be easily removed by a vacuum pressure provided into the battery cell (10).

However, the negative electrodes (21), the separators (22), and the positive electrodes (23) of the electrode assembly (20) act as interfering factors that hinder the flow of the vacuum pressure, so that the stagnant gas (G2) may remain in the battery cell (10) even after the degassing step.

In addition, referring to Figure 2, upon the activation process, the gas (G) penetrating into the electrolyte (40) is also difficult to be sucked by the vacuum pressure of the degassing step, so that it may remain in the battery cell.

Such remaining gas in the battery cell affects the performance and lifespan of the battery cell. The greater the amount of the remaining gas in the battery cell, the lower the performance of the battery cell and the shorter its lifespan.

### Disclosure

### Technical Problem

The present invention has been devised to solve such problems, and is intended to provide a degassing device and a degassing method by performing, after degassing pretreatment for inducing molecular movement of gases in a battery cell, a degassing process of removing the gases in the battery cell, whereby a remaining gas amount in the battery cell can be reduced after degassing of the battery cell.

### Technical Solution

A degassing device according to one example of the present invention is a device for degassing gases inside a battery cell after an activation process of the battery cell including an electrode assembly, which may comprise a degassing pretreatment part provided to irradiate the battery cell with a microwave, for vibrating and heating the gases in the battery cell, and a degassing part provided so that after the microwave irradiation, a gas pocket in the battery cell is pierced and the gases are vacuum-sucked through the pierced portion.

The degassing pretreatment part may be provided so that the microwave is irradiated while varying a frequency.

In one example, the degassing pretreatment part may be provided so that the microwave is irradiated while varying a frequency within a predetermined range.

Also, the frequency may be varied in a range of 2.45GHz to 7GHz.

In addition, the degassing pretreatment part may be provided so that the microwave is irradiated by varying an irradiation time depending on the frequency range.

Furthermore, the degassing pretreatment part may be provided so that the microwave is irradiated while maintaining an irradiation time equally depending on the frequency range.

Also, the degassing pretreatment part may be provided so that the microwave is irradiated while increasing the frequency. The degassing pretreatment part may be provided so that the microwave is irradiated while increasing the frequency within a predetermined range (for example, a range of 2.45GHz to 7GHz).

In addition, the degassing pretreatment part may be provided so that the microwave is irradiated while decreasing the frequency. The degassing pretreatment part may be provided so that the microwave is irradiated while decreasing the frequency within a predetermined range (for example, a range of 2.45GHz to 7GHz).

Furthermore, the degassing pretreatment part may be provided so that the microwave is irradiated while periodically increasing and decreasing the frequency within a predetermined range.

Also, the degassing pretreatment part may comprise a chamber part provided with a chamber space in which the battery cell is accommodated, a microwave irradiation part which is disposed in the chamber space and for irradiating it with a microwave at a predetermined frequency, and a pretreatment control part controlling an operating power and an operating time of the microwave irradiation part so that the gases in the battery cell are heated to a preset temperature.

In addition, the operating power may be in a range of 0.1 to 0.3 times the maximum power.

Furthermore, the degassing device may comprise a gas measurement part provided to measure a gas amount in the battery cell.

Also, the degassing part may comprise a piercing part provided to pierce the gas pocket, a suction part connected to be fluidly movable with the pierced portion, and provided so that a vacuum pressure is applied to the pierced portion, and the gases in the battery cell are sucked using the pierced portion as a gas discharge passage, and a sealing part provided to seal the pierced portion.

In addition, a degassing method according to one example of the present invention is a method using the degassing device, wherein the degassing method is for degassing gases in a battery cell after an activation process of the battery cell including an electrode assembly, which may comprise a degassing pretreatment step of irradiating the battery cell with a microwave, for vibrating and heating the gases in the battery cell, and a degassing step of piercing a gas pocket of the battery cell after the microwave irradiation, and vacuum-sucking the gases through the pierced portion to remove the gases in the battery cell.

In the degassing pretreatment step, the microwave may vibrate and heat stagnant gases retarded in the electrode assembly, and the stagnant gases may flow from a stagnation region of the electrode assembly into an internal space of the battery cell.

Also, in the degassing pretreatment step, the microwave may vibrate and heat an electrolyte in the battery cell, and gases contained in the electrolyte may be vaporized in the electrolyte and flow from the electrolyte into an internal space of the battery cell.

In one example, in the degassing pretreatment step, it may be provided so that the microwave is irradiated by varying a frequency within a predetermined range.

Also, in the degassing pretreatment step, the frequency may be varied in a range of 2.45GHz to 7GHz.

In addition, in the degassing pretreatment step, it may be provided so that the microwave is irradiated by varying an irradiation time depending on the frequency range.

Furthermore, in the degassing pretreatment step, it may be provided so that the microwave is irradiated while maintaining an irradiation time equally depending on the frequency range.

Also, in the degassing pretreatment step, it may be provided so that the microwave is irradiated while increasing the frequency. The degassing pretreatment part may be provided so that the microwave is irradiated while increasing the frequency within a predetermined range (for example, a range of 2.45GHz to 7GHz).

In addition, in the degassing pretreatment step, it may be provided so that the microwave is irradiated while decreasing the frequency. The degassing pretreatment part may be provided so that the microwave is irradiated while decreasing the frequency within a predetermined range (for example, a range of 2.45GHz to 7GHz).

Furthermore, in the degassing pretreatment step, it may be provided so that the microwave is irradiated while periodically increasing and decreasing the frequency within a predetermined range.

### Advantageous Effects

As described above, the degassing device related to one example of the present invention, and the degassing method using the same have the following effects.

Through the degassing pretreatment process for the battery cell, the gases and electrolyte in the battery cell are heated and vibrated by the variable frequency microwave to perform the degassing process, whereby the gases captured in the gas pocket as well as the gases escaped from the electrode assembly and the electrolyte can be removed.

By performing degassing after the degassing pretreatment for the battery cell, the gases captured in the gas pocket, the gases retarded in the electrode assembly after activation, and the gases absorbed in the electrolyte upon activation can be removed, thereby improving the gas removal efficiency, and reducing the remaining gas amount in the battery cell after degassing.

Also, the remaining gas amount in the battery cell can be reduced by approximately 10% to 15% or so compared to the remaining gas amount in the conventional battery cell without performing the degassing pretreatment.

In addition, the performance of the battery cell can be improved and the lifespan of the battery cell can be extended according to reduction of the remaining gas amount in the battery cell.

### Description of Drawings

Figure 1 is a perspective diagram of a pouch-type battery cell.
Figure 2 is a diagram for explaining a flow of gas flowing in a loose space of an electrode assembly in an activation process.
Figure 3 is a diagram for explaining s distribution of gas in a battery cell after an activation process of the battery cell.
Figure 4 is a configuration diagram of a degassing device according to one example of the present invention.
Figure 5 is a configuration diagram of a degassing pretreatment part according to one example of the present invention.
Figure 6 is a diagram for explaining molecular movement of gas in a battery cell subjected to degassing pretreatment in one example of the present invention.
Figure 7 is a diagram for explaining a flow of stagnant gas in the stagnant region of Figure 6 upon degassing pretreatment.
Figure 8 is a diagram for explaining a process of degassing a battery cell subjected to degassing pretreatment according to one example of the present invention.

### Mode for Invention

Hereinafter, with reference to the attached drawings, a degassing device according to one example of the present invention, and a degassing method using the same will be described.

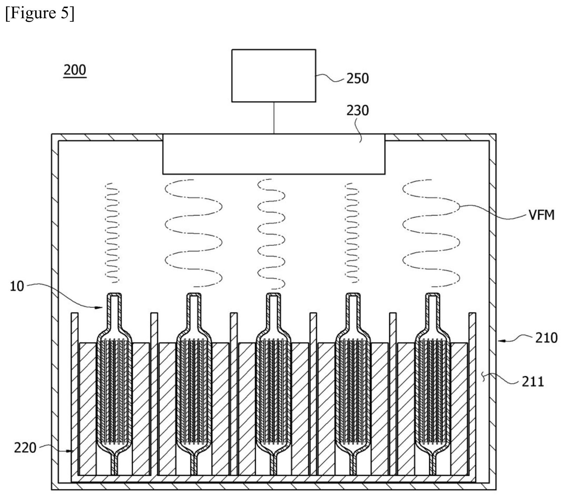

Figure 4 is a configuration diagram of a degassing device according to one example of the present invention, and Figure 5 is a configuration diagram of a degassing pretreatment part according to one example of the present invention.

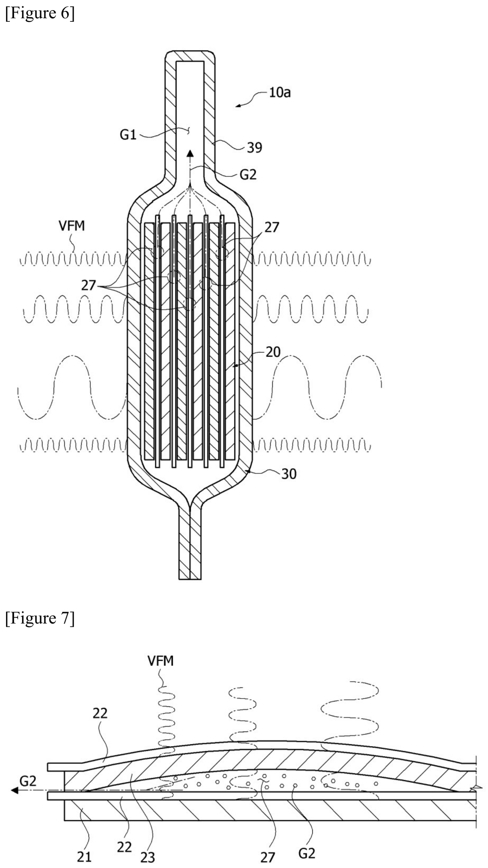

Figure 6 is a diagram for explaining molecular movement of gas in a battery cell (10a) subjected to degassing pretreatment according to one example of the present invention, and Figure 7 is a diagram for explaining a flow of stagnant gas in the stagnant region of Figure 6 upon degassing pretreatment.

Referring to Figures 2, 3, 4, and 5, a degassing device (100) according to one example of the present invention is a device for degassing gases (G) inside a battery cell (10) after an activation process of the battery cell (10) including an electrode assembly (20), which may comprise a degassing pretreatment part (200) provided to irradiate the battery cell (10) with a microwave, for vibrating and heating the gases (G) in the battery cell (10) after the activation process, and a degassing part (300) provided so that after the microwave irradiation, a gas pocket (39) in the battery cell (10) is pierced and the gases (G) are vacuum-sucked through the pierced portion (38).

The degassing pretreatment part (200) is a device for vibrating and heating the gases (G) and electrolyte (40) in the battery cell (10). The degassing pretreatment part (200) may be provided so that the microwave is irradiated while varying a frequency.

As described above, the gases (G) in the battery cell (10) may be divided into pocket gas (G1) captured in the gas pocket (39) and stagnant gas (G2) retarded in the electrode assembly (20). In this document, the term gases (G) in the battery cell (10) may be used as a concept including pocket gas (G1) captured in the gas pocket (39) and stagnant gas (G2) retarded in the electrode assembly (20).

A variable frequency microwave (VFM) is a microwave whose waveform varies depending on the frequency. The variable frequency microwave (VFM) may have a frequency variable in a frequency range of 2.45GHz to 7GHz. The variable frequency microwave (VFM) may have a variable penetration depth into the electrode assembly (20) depending on the frequency range.

The degassing pretreatment part (200) may be provided so that a microwave (VFM) is irradiated while periodically increasing and decreasing the frequency within a predetermined range. Through periodical adjustment of the frequency, the vibration energy provided to the battery cell (10) can be adjusted, so that various types of gases can be preprocessed according to the intensity of the vibration energy.

In addition, the degassing pretreatment part (200) may be provided so that a microwave (VFM) is irradiated by varying an irradiation time depending on the frequency range. For example, in the range of 2.45GHz to 7GHz, the irradiation time, such as 1 minute at 3GHz, and 2 minutes at 5GHz, may be varied according to the frequency. Through this, it is possible to precisely control the thermal energy and vibration energy transferred to the gases (G) and/or electrolyte (40) in the battery cell (10).

Alternatively, the degassing pretreatment part (200) may be provided so that a microwave (VFM) is irradiated while maintaining the irradiation time equally according to the frequency range.

In addition, the degassing pretreatment part (200) may be provided so that a microwave (VFM) is irradiated while increasing the frequency. Alternatively, the degassing pretreatment part (200) may be provided so that a microwave (VFM) is irradiated while decreasing the frequency.

Through the frequency adjustment, the degassing pretreatment part (200) may maintain the temperature of the gases (G) and/or the electrolyte (40) in the battery cell (10) at a preset temperature (e.g., 60 degrees). By varying the preset temperature depending on the type of gas, various types of gases may be preprocessed.

Referring to Figure 5, the degassing pretreatment part (200) comprises a chamber part (210) provided with a chamber space (211) where a battery cell (10) is accommodated, and a microwave irradiation part (230) which is disposed in the chamber space (211) and for irradiating it with a variable microwave (VFM).

The chamber part (210) has a chamber space (211) capable of holding a tray (220) where the battery cell (10) is accommodated. One or more battery cells (10) after the activation process are accommodated in the tray (220). The chamber space (211) may be a sealed space. A microwave irradiation part (230) may be installed in the chamber space (211). The microwave irradiation part (230) may generate a variable frequency microwave (VFM) into the chamber space (211).

In addition, the degassing pretreatment part (200) may comprise a pretreatment control part (250) controlling an operating power and an operating time of the microwave irradiation part (230) so that the gases (G) in the battery cell (10) are heated to a preset temperature.

The pretreatment control part (250) may control the operating power and operating time of the microwave irradiation part (230) so that the gases (G) in the battery cell (10) are not heated to 60 degrees or more. The operating power of the microwave irradiation part (230) may be in a range of 0.1 to 0.3 times the maximum power.

The variable frequency microwave (VFM) generates heat through interactions of gas molecules. Due to this heat, the gases (G) perform molecular movement while they expand and the pressure increases.

The gases (G) in the gas pocket (39) are vibrated and heated by the variable frequency microwave (VFM), and the molecular movement becomes active.

Referring to Figures 6 and 7, the variable frequency microwave (VFM) penetrates the negative electrode (21) and the positive electrode (23) of the electrode assembly (20) made of a metal material. Then, the variable frequency microwave (VFM) may react with the gases (2) and electrolyte, thereby vibrating and heating the gases (G) and electrolyte (40, see Figure 2).

While the gases (G) retarded in the electrode assembly (20) are vibrated and heated by the variable frequency microwave (VFM), and the molecular movement becomes active, they may flow from the stagnant region (27) of the electrode assembly (20) into an internal space of the battery cell (10).

In addition, the gases (G) included in the electrolyte (40) may be vaporized by variable frequency microwave (VFM) and removed from the electrolyte (40). The gases (G) vaporized in the electrolyte (40) may flow into an internal space of the battery cell (10).

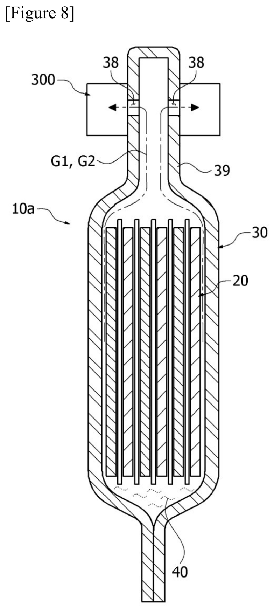

Figure 8 is a diagram for explaining a process of degassing a battery cell (10a) subjected to degassing pretreatment according to one example of the present invention.

The degassing part (300) is provided so that the gas pocket (39) of the battery cell (10a) subjected to degassing pretreatment is pierced, and the gases (G) are vacuum-sucked through the pierced portion (38). The degassing part (300) may be installed in the chamber space (211) of the degassing pretreatment part (200). Alternatively, the degassing part (300) may be installed separately from the degassing pretreatment part (200) outside the degassing pretreatment part (200).

In the degassing part (300), a degassing step for removing the gases (G) in the battery cell (10a) subjected to degassing pretreatment is performed.

Referring to Figure 4, the degassing part (300) comprises a piercing part (310), a suction part (320), and a sealing part (330). The piercing part (310) is provided to pierce the gas pocket (39) of the battery cell (10). The piercing part (310) may be provided to penetrate the pouch (30) in the region forming the gas pocket (39) of the battery cell (10). By the piercing part (310), a pierced portion (38) is formed in the pouch (30) region forming the gas pocket (39).

The suction part (320) is connected to be fluidly movable with the pierced portion (38) of the gas pocket (39), and provided to apply vacuum pressure to the pierced portion (38). The suction part (320) may suck the gases (G) in the battery cell (10) using the pierced portion (38) as a gas discharge passage. The sealing part (330) is provided to seal the pierced portion (38).

Conventionally, as the degassing step of removing the gases (G) of the battery cell (10) is performed in a state where the molecular movement of the gases (G) is insensitive via the ageing process of the battery cell (10), even after the degassing step, the stagnant gases (G2) retarded in the electrode assembly (20) have remained in the internal space of the battery cell (10) (see Figure 3).

In contrast, the present invention vibrates and heats the gases (G) in the battery cell (10) before the degassing step to induce molecular movement of the gases (G), and then performs the degassing step. Accordingly, as shown in Figure 8, the degassing part (300) may remove not only the pocket gases (G1) captured in the gas pocket (39) but also the stagnant gases (G2) retarded in the electrode assembly (20).

In addition, the degassing device (100) may comprise a gas measurement part (400) measuring the gas amount in the battery cell (10).

[Table 1] below shows the remaining gas amount of in the battery cell (10) after degassing depending on whether the variable frequency microwave (VFM) is applied and the variable frequency microwave (VFM) conditions.

**[Table 1]**

| | VFM application | VFM condition (time) | Quantity (cell) | Average remaining gas amount (ml) |
|---|---|---|---|---|
| Comparative Example | No application | - | 6 | 14.6 |
| Experimental Example 1 | Application | 10sec | 6 | 13.8 |
| Experimental Example 2 | Application | 10min | 6 | 12.6 |

In Table 1, with respect to Comparative Example, an average remaining gas amount of battery cells (10) (total 6 battery cells) is measured after performing a degassing step of the battery cells (10) without treatment with a variable frequency microwave (VFM). In Comparative Example, the average remaining gas amount of the battery cells (10) is 14.6ml.

In Experimental Examples 1 and 2, the results are obtained by varying operating times while applying the same variable frequency microwave (VFM) condition in a range of 2.45GHz to 7GHz and applying the same operating power.

In Experimental Example 1, an average remaining gas amount of battery cells (10a) (total 6 battery cells) is measured by providing the battery cells (10) with a variable frequency microwave (VFM) for 10 seconds (operating time) at 10% power (operating power, 0.1 times the maximum power), and then performing a degassing step of the battery cells (10).

In Experimental Example 1, the average remaining gas amount of the battery cells (10a) is 13.8ml. Even when the variable frequency microwave (VFM) is provided for a very short time of 10 seconds, it can be known that the remaining gas amount is reduced by approximately 5% or so compared to the battery cells (Comparative Example) to which the variable frequency microwave (VFM) is not applied.

In Experimental Example 2, an average remaining gas amount of battery cells (10a) (total 6 battery cells) is measured by providing the battery cells (10) with a variable frequency microwave (VFM) for 10 minutes at 10% power, and then performing a degassing step of the battery cells (10).

In Experimental Example 2, the average remaining gas amount of the battery cells (10) is 12.6ml.

It can be known that in the battery cells (Experimental Example 2) treated with the variable frequency microwave (VFM) for 10 minutes, the remaining gas amount is reduced by approximately 15.8% or so compared to the battery cells (Comparative Example) to which the variable frequency microwave (VFM) is not applied.

In addition, it can be known that in the battery cells (Experimental Example 2) treated with the variable frequency microwave (VFM) for 10 minutes, the remaining gas amount is reduced by approximately 9.5% or so compared to the battery cells (Experimental Example 1) treated with the variable frequency microwave (VFM) for 10 seconds. It can be known therefrom that even if the variable frequency microwave (VFM) is provided to the battery cells (10) with the same power, the longer the operating time of the variable frequency microwave (VFM), the more the remaining gas amount of the battery cells (10) is reduced.

By performing the degassing pretreatment step of vibrating and heating the gases (G) in the battery cells (10) before the degassing step, the gas (G) removal efficiency of the degassing step can be improved and the remaining gas amount of the battery cells (10) can be reduced.

In addition, according to the reduction of the remaining gas amount in the battery cell (10), the performance of the battery cell (10) can be improved and the lifespan of the battery cell (10) can be extended.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a degassing device related to one example of the present invention, and a degassing method using the same, by heating and vibrating gases and an electrolyte in a battery cell using a variable frequency microwave, it is possible to remove gases captured in a gas pocket as well as gases escaping from an electrode assembly and the electrolyte.

## Claims

1. A degassing device for degassing gases inside a battery cell after an activation process of the battery cell including an electrode assembly, comprising:
a degassing pretreatment part provided to irradiate the battery cell with a microwave, for vibrating and heating the gases in the battery cell; and
a degassing part provided so that after the microwave irradiation, a gas pocket in the battery cell is pierced and the gases are vacuum-sucked through the pierced portion.

2. The degassing device according to claim 1, wherein
the degassing pretreatment part is provided so that the microwave is irradiated while varying a frequency within a predetermined range.

3. The degassing device according to claim 2, wherein
the frequency is varied in a range of 2.45GHz to 7GHz.

4. The degassing device according to claim 2, wherein
the degassing pretreatment part is provided so that the microwave is irradiated by varying an irradiation time depending on the frequency range.

5. The degassing device according to claim 2, wherein
the degassing pretreatment part is provided so that the microwave is irradiated while maintaining an irradiation time equally depending on the frequency range.

6. The degassing device according to claim 2, wherein
the degassing pretreatment part is provided so that the microwave is irradiated while increasing the frequency.

7. The degassing device according to claim 2, wherein
the degassing pretreatment part is provided so that the microwave is irradiated while decreasing the frequency.

8. The degassing device according to claim 2, wherein
the degassing pretreatment part is provided so that the microwave is irradiated while periodically increasing and decreasing the frequency within a predetermined range.

9. The degassing device according to claim 1, wherein the degassing pretreatment part comprises:
a chamber part provided with a chamber space in which the battery cell is accommodated;
a microwave irradiation part which is disposed in the chamber space and for irradiating it with a microwave at a predetermined frequency; and
a pretreatment control part controlling an operating power and an operating time of the microwave irradiation part so that the gases in the battery cell are heated to a preset temperature.

10. The degassing device according to claim 9, wherein
the operating power is in a range of 0.1 to 0.3 times the maximum power.

11. The degassing device according to claim 1, further comprising
a gas measurement part provided to measure a gas amount in the battery cell.

12. The degassing device according to claim 1, wherein the degassing part comprises:
a piercing part provided to pierce the gas pocket;
a suction part connected to be fluidly movable with the pierced portion, and provided so that a vacuum pressure is applied to the pierced portion, and the gases in the battery cell are sucked using the pierced portion as a gas discharge passage; and
a sealing part provided to seal the pierced portion.

13. A degassing method for degassing gases in a battery cell after an activation process of the battery cell including an electrode assembly, comprising:
a degassing pretreatment step of irradiating the battery cell with a microwave, for vibrating and heating the gases in the battery cell; and
a degassing step of piercing a gas pocket of the battery cell after the microwave irradiation, and vacuum-sucking the gases through the pierced portion to remove the gases in the battery cell.

14. The degassing method according to claim 13, wherein
in the degassing pretreatment step, the microwave vibrates and heats stagnant gases retarded in the electrode assembly, and
the stagnant gases flow from a stagnation region of the electrode assembly into an internal space of the battery cell.

15. The degassing method according to claim 13, wherein
in the degassing pretreatment step, the microwave vibrates and heats an electrolyte in the battery cell, and
gases contained in the electrolyte are vaporized in the electrolyte and flow from the electrolyte into an internal space of the battery cell.
